# NEW EUROPEAN PATENT SPECIFICATION

(11) **EP 1 892 897 B2**
(45) Date of publication and mention of the opposition decision: **14.06.2017**
(45) Mention of the grant of the patent: 12.06.2013
(21) Application number: 06753141.8
(22) Date of filing: 14.07.2006
(51) Int. Cl.: H04L 29/06

(54) **A CROSS-DOMAIN ROUTING CONTROL METHOD**
EIN CROSS-DOMAIN ROUTING-KONTROLLVERFAHREN
COMMANDE DE ROUTAGE INTERDOMAINE

(30) Priority: 04.08.2005 CN 200510028494
(43) Date of publication of application: 27.02.2008
(73) Proprietor: Huawei Technologies Co., Ltd., Longgang District Shenzhen, Guangdong 518129 (CN)
(72) Inventor: ZHU, Dongming, Shenzhen, Guangdong 518129 (CN); ZHANG, Hai, Shenzhen, Guangdong 518129 (CN); DUAN, Xiaoqin, Shenzhen, Guangdong 518129 (CN)
(74) Representative: Körber, Martin Hans
(86) International application number: PCT/CN2006/001673
(87) International publication number: WO 2007/014510

(56) References cited:
- CN-A- 1 349 330
- US-A1- 2004 208 175
- US-B1- 6 823 395
- BASIC L ET AL: "Routing solution for VoIP calls in large-scale IP MM networks" ELECTROTECHNICAL CONFERENCE, 2004. MELECON 2004. PROCEEDINGS OF THE 12 TH IEEE MEDITERRANEAN DUBROVNIK, CROATIA 12-15 MAY 2004, PISCATAWAY, NJ, USA,IEEE, US, 12 May 2004 (2004-05-12), pages 673-676, XP010735190 ISBN: 978-0-7803-8271-8

## Description

### Field of the Invention

The present invention relates to routing control technologies, and more particularly, to a method of cross-domain selection for routing control in communication systems.

### Background of the Invention

Along with the rapid development of communications technologies, expectations and requirements upon personal communications grow increasingly. Therefore, mobile network operators need to pay special attention to aspects such as a user interface and service quality, which directly affect an effect of a user using a mobile service. Although a 3rd generation (3rd Generation, 3G for short) mobile communications system greatly attracts a mobile consumption market with features such as a broad bandwidth, varieties of services and high quality, there are still problems in 3G technologies restricting development of the mobile services. For example, how to fully utilize existing network resources after new network technologies are continually introduced, how to provide better service experience for users by combining the features and capabilities of different network technologies, etc. These unsettled problems restrict enlargement of market to some extent.

In a 3G network architecture defined by current standards, the mobile network is no longer limited to a circuit switched manner, but gradually evolves into a packet Internet protocol (Internet Protocol, IP) network. Starting from an R5 phase of a 3rd Generation Partnership Project (3rd Generation Partnership Project, 3GPP), a core network of a universal mobile telecommunications system (Universal Mobile Telecommunications system, UMTS) has been divided into three sub-systems, namely, a circuit switched domain (Circuit Switched, CS), a packet switched domain (Packet Switched, PS) and an IP multimedia subsystem (IP Multimedia Subsystem, IMS).

The CS domain is used to provide, for users, connections for circuit switched services, and mainly includes the following functional entities: a mobile switching center (Mobile switching center, MSC), a gateway mobile switching center (Gateway Mobile Switching Center, GMSC) and an inter-working function (Interworking Function, IWF). The MSC is used to complete switching and signaling control functions for circuit switched services, and may include an MSC server (MSC server) and a CS media gateway (CS Media Gateway, CS-MGW) in an architecture in which control and bearer are separated. The GMSC is used to complete routing and addressing functions for a mobile user in a certain network and may be co-located with the MSC or separated from the MSC. The IWF is closely related to the MSC and is used to complete interworking between a public land mobile network (Public Land Mobile Network, PLMN) and an integrated service digital network (Integrated Service Digital Network, ISDN), or between the PLMN and a public switch telecommunication network (Public Switch Telecommunication Network, PSTN), or between the PLMN and a public data network (Public Data Network, PDN), and mainly implements a signaling conversion function, and the specific functions are stipulated according to different services and network types.

The PS domain provides, for users, connections for packet switched services, and this domain mainly includes the following functional entities: a general packet radio service support node (General Packet Radio Service Support Node, GSN), used for packet transmission for packet switched service users. The GSN further includes a service GSN (Service GSN, SGSN) and a gateway GSN (Gateway GSN, GGSN), where the SGSN provides connections between a core network and a radio access system base station subsystem (Base station Subsystem, BSS) or a radio network controller (Radio Network Controller, RNC), performs functions such as mobility management and session management of the packet switched data services, and manages mobility and communications services of a mobile station (Mobile station, MS) in the mobile network; and as an interface between the mobile communications network and another public data network, the GGSN also has a function of querying for location information. Both the SGSN and the GGSN provide charging information. In addition, a boarder gateway (Boarder Gateway, BG) is configured at the edge of a network to complete interworking between two GPRS networks and ensure the security of the network interworking.

Additionally, some functional entities are shared by the CS and PS domains, for example, a home location register (Home Location Register, HLR)/an authentication center (Authentication Center, AuC). The HLR manages subscription data) and location information of the user, e.g., mobile station international ISDN number (MSISDN), international mobile subscriber identity (IMSI, International Mobile Subscriber Identity), subscribed Telephony services and supplementary services and application scopes of these services, MSC/VLR number, SGSN number, etc. The AuC stores authentication algorithms and keys of users. Other functional entities include a visit location register (Visit Location Register, VLR), which processes data of visited users, an equipment identity register (Equipment Identity Register, EIR), which stores an international mobile equipment identity (International Mobile Equipment Identity, IMEI), short message service center gateway MSC, and the like.

The IMS is a subsystem superposed on the existing packet switched domain in the Wideband Code Division Multiple Access (Wideband Code Division Multiple Access, WCDMA) network added in 3GPP R5 phase. The IMS employs the packet switched domain as the bearer channel for the transmission of upper layer control signaling and media, adopts a Session Initial Protocol (Session Initial Protocol, SIP) as a service control protocol, and provides abundant of multimedia services for users by separating the service control and the bearer control, and by utilizing the characteristics of the SIP, that is, simple, extensible and convenient for media combination. The functional entities in the IMS mainly include a call session control function (Call Session Control Function, CSCF), which is used for controlling functions such as user registration and session control, an application server (Application server, AS), which provides varieties of service logic control functions, a home subscriber server (Home Subscriber server, HSS), which is used for centralized administration of subscription data of the user, and a media gateway control function (Media Gateway Control Function, MGCF)/an IMS media gateway function (IMS Media Gateway, IM-MGW), which is used for interworking between the IMS and the circuit switched network. The user accesses the IMS through a proxy call session control function (Proxy-CSCF, P-CSCF) of a proxy node in an area in which the user currently locates. A service call session control function (service CSCF, S-CSCF) of a home domain service node in the area in which the user registers performs the session control, service triggering control, and service control interaction with the AS. Another interrogating call session control function (Interrogating CSCF, I-CSCF) of a query node performs an entrance query and network topology hiding function. The HSS in the IMS system is a superset of the HLR and functionally compatible with the HLR. In specific networking, due to a factor such as a network establishment process, the HSS and the HLR in the CS/PS domain are very likely to be separated from each other.

The IMS architecture defined by the 3GPP standards solves critical problems concerning operability of multimedia services over IP, including roaming charging, Quality of Service (Quality of Service, QoS), security assurance, and the like. The architecture and ideas of the IMS have been widely admitted in the industry. Both 3GPP2, which drafts the technical standards for cdma2000 system, and the TISPAN, which drafts the technical standards for the next generation of fixed network, define corresponding IP multimedia network architectures and service systems based on the IMS model defined by the 3GPP, i.e., the IP multimedia systems defined by different organizations have the same architecture.

Meanwhile, the 3GPP has begun to study the Interworking of wireless local area network (WLAN) access with 3GPP system (I-WLAN), Fixed Broadband IMS access and the all-IP network (AIPN) which supports multiple access technologies. The user can access, according to subscription of the user, the IMS via access networks of different access technologies with a single multi-mode terminal or different types of terminals so as to receive unified multimedia services including a voice over packet (VoIP) service. Furthermore, in the 3GPP R7, a work item is approved to study the solution of service continuity between the CS call and the VoIP service provided by accessing the IMS via the WLAN, and an issue of routing selection between the CS domain and the IMS is raised when receiving an incoming call destined to a user, so as to meet the demands of network and service developments.

In a new application environment with multiple available domains, in order to enrich the variety and diversity of services for the user and improve the mobile service market for the operators, the network is required to be able to provide an implementation of selecting a voice call between multiple domains, for example, be able to choose to use a circuit switched voice service via the GSM, WCDMA or cdma2000, and PSTN, or be able to choose to use a VoIP service via the IMS accessed via various fixed or mobile IPCAN. Then a new issue of domain selection is brought out, that is, when an incoming call destined to a user is received, how an incoming route selects different domain to deliver the incoming call according to a routing policy and other conditions. The settlement of the cross-domain routing problem directly affects whether the user is able to register in multiple domains simultaneously and enjoy a multi-domain voice service flexibly.

Because the requirement is originally raised in the 3GPP, the CS/IMS of the WCDMA system is mainly taken as an example hereinafter. But according to the foregoing descriptions, it can be seen that the requirement of cross-domain selection also exists between CS voice services provided in the GSM, cdma 2000 CS domain and the PSTN and VoIP services provided in the IMS accessed via various fixed/mobile IPCAN.

To solve the foregoing CS/IMS cross-domain routing problem, an existing technical solution is to introduce a routing policy decision point (Routing Policy Decision Point, RPDP) entity into a system that includes the CS/IMS, and in addition, during the domain selection procedure, the RPDP entity is queried for a routing decision. The RPDP entity makes a current routing decision according to a current routing policy pre-configured and stored in the RPDP entity and routing decision related information of the user in the CS/IMS, returns routing information determined according to the current routing decision, and controls a routing control entity in the CS/IMS domain to perform subsequent routing control for the incoming call/session.

The existing technical solution may have two typical implementation modes of a call-control protocol based interface and a non-call-control protocol based interface according to a type of an interface used for a query of the routing decision.

In the mode based on the call-control protocol based interface, the routing control entity in the CS/IMS queries the RPDP entity for the routing decision through the call-control protocol based interface. For example, the GMSC in the GSM or in the WCDMA CS domain interacts with the RPDP entity functioning as a GSM service control function (GSM Service Control Function, gsmSCF) of a global system of mobile communication (Global System of Mobile Communication, GSM) through a customized application for mobile network enhanced logic (Customized Application for Mobile network Enhanced Logic, CAMEL) application part (CAMEL Application Part, CAP) interface; or the GMSC in the cdma2000 CS domain interacts with the RPDP entity functioning as a wireless intelligent network) service control function through an American National Standards Institute-41 mobile application protocol (ANSI-41 MAP); or a local exchanger in the PSTN interacts with the RPDP entity functioning as a fixed Intelligent Network service control function through an intelligent network application protocol; or the S-CSCF in the IMS interacts with the RPDP entity functioning as an AS through an IMS service control interface (IP multimedia subsystem service Control interface, ISC). Thus, the query of the routing decision and the routing control according to the routing decision may be implemented.

In the mode based on the non-call-control protocol based interface, the routing control entity in the CS/IMS queries the RPDP entity for the routing decision through the non-call-control protocol based interface. For example, the RPDP entity which functions as a signaling transfer point (signaling Transfer Point, STP) intercepts a routing information query message from the GMSC to the HLR in the GSM, WCDMA CS domain or cdma2000 CS domain; or the HLR in the GSM, WCDMA CS domain or cdma2000 CS domain queries, upon the receipt of the routing information query message from the GMSC, the new RPDP entity through a new interface; or the HSS in the IMS domain queries, upon the receipt of the routing information query message from the I-CSCF, the RPDP entity through another new interface, so as to implement the query of the current routing decision and the routing control according to the current decision.

However, in the above two modes of the existing technical solution, the current routing decision related information of the user in the CS/IMS for the RPDP entity to make the routing decision is always obtained by interacting with the HLR/HSS. For example, the RPDP entity queries, the HLR/HSS for the routing decision related information when making the routing decision, or the routing decision related information is locally stored in the RPDP entity and is actively updated by the HLR/HSS when the related information changes. The HLR/HSS has no knowledge about the current call status of the user in the CS/IMS, and therefore, the prior art does not consider the current call statuses of the user in the two domains when routing decision is made. In other words, under the scenario in which the user registers in the two domains, the existing solution does not consider how to select the domain to deliver an incoming call to avoid the problem that two calls are delivered via two domains while the user can only accept one of the calls.

In a practical application, a user equipment usually has only one audio I/O channel (voice channel) and the user usually can only answer one call at one time. Therefore, even when the user equipment possibly has a capability of accessing the CS/IMS at the same time and establishing calls/sessions, actually it is impossible to engage in two voice calls separately in the CS and the IMS at the same time. Therefore, when routing an incoming call, it is necessary to avoid an abnormal condition that two calls are delivered to the user via the two domains separately while the user can only answer one of them.

According to an existing technical condition, in a same domain, a current service can handle multiple calls or a subsequent call. For example, in the CS domain, corresponding supplementary services are defined to handle the subsequent call during an existing call, including call waiting, call holding, multi-party service, call forwarding on subscriber busy, etc. Thus, an incoming call may be handled when there is an existing call. In the IMS, although no such service is defined in detail as in the CS domain, services with features similar to those of the foregoing service are provided, so that such a subsequent call can be handled. However, in a new application environment, when the user has registered in the two domains at the same time, and the user has an existing call in one domain but a subsequent call is delivered via the other domain, the existing solution for handling the subsequent call in the same domain cannot be used to solve such a problem. The main reason for causing this case is that: in the domain selection process in the prior art, the domain is selected without consideration of a current call status of the user and no effective mechanism is adopted to prevent the subsequent call to be delivered via a domain other than the domain in which the user has an existing call, causing an abnormal case in which calls are delivered via the two domains at the same time.

Therefore, in the case that the two domains are capable of providing voice services to the user at the same time, it needs to avoid an abnormal case in which a call is delivered to the user via a domain other than the domain in which the user has an existing call. That is, how to deliver the subsequent call to the domain in which the user has an existing call and utilize a subsequent service processing mechanism already existing in the prior art such as the supplementary services in the CS domain is a problem to be solved.

The GSM, WCDMA CS domain and cdma2000 CS domain have similar network architectures, and the intelligent networks of the PSTN, GSM, WCDMA and cdma2000 system have basically the same architecture. Moreover, the IP multimedia systems defined by different organizations have similar architectures. That is, the IMS accessed via various fixed/mobile IPCAN have similar architectures. Therefore the solution of cross-domain routing control in the prior art and the problem analyzed above and requirement for solving the problem are similar in the above various scenarios.

BASIC L ET AL "Routing solution for VoIP calls in large-scale IP MM networks" (IEEE Electrotechnical conference, MELECON 2004) provides a BGCF prototype as solution for routing of VoIP calls in 3GPP IP Multimedia network (IP MM) to a destination in PSTN/CS domain. The BGCF is a mandatory functionality in large scale IP MM networks to fulfill inter-working with the PSTN/CS domain. The main task of the BGCF node is to select IP MM-PSTN nodes for through connection (from PS/IP to CS/PSTN domain networks), i.e., the BGCF receives a request from the S-CSCF if the destination of the IP MM call/session is in the PSTN/CS domain, then the BGCF selects a local MGCF for interworking with the PSTN/CS domain or a BGCF in anther operator's network which will then select the MGCF for interworking with the PSTN/CS domain. The article does not describe the BGCF to select the domain for delivering an incoming call/session for a user who is available both in the IP-MM(IMS)/PS and the CS domain and who is already engaged in an existing call.

### Summary of the Invention

In view of this, the main objective of the present invention is to provide a cross-domain routing control method, so that cross-domain routing can be controlled according to call status of user in different domains. The present invention presents a method of domain selection for routing control according to claim 1. Advantageous implementations are defined in the dependent claims.

It can be found by comparison that, the technical solution of the present invention differs from the prior art mainly in that, when an incoming call request is delivered, the call status of the user currently in the different domains are considered. When the user has an existing call in one domain, the same domain is selected to perform subsequent routing processing on a new call, so that not only an abnormal case in which incoming calls are delivered through the two domains at the same time is prevented, but also an existing supplementary service of each domain for subsequent service processing may be provided for the user continuously. Furthermore, the method provided by the present invention further provides the following merits and features:
1) The present invention may be implemented by simply upgrading or modifying the related art, which means the embodiments of the present invention are compatible with the related art and may be implemented with low technical cost.
2) In the present invention, separately in a cases in which the call status in only one domain is learned and in a case in which the call statuses in the two domains are learned, routing with domain selection is performed, and the domain in which the user has an active call is selected as far as possible for the subsequent routing. That is, the cross-domain routing control solution that considers the current call status of the user is used, so that not only an abnormal case in which incoming calls are delivered through the two domains at the same time is prevented, but also the existing supplementary service of each domain for subsequent service processing may be provided for the user continuously. In this way, the present invention fits the case in which the user equipment has only one audio I/O module and cannot maintain voice conversations at the same time in the CS/IMS domain, and a processing requirement for a service feature related to the existing subsequent call handling during a call in the CS/IMS domain is provided continuously.
3) In the case in which the CS domain and the IMS domains have mutually independent RPDP entities, the present invention implements the synchronization mechanism between the two RPDP entities through an internal interface or an external SIP/CAP/USSD/SMS interface, to ensure that the RPDPs in different domains share the latest call status information and that the routing based on the call status can be performed accurately, which enhances the reliability of the RPDP entity cross-domain control.
4) The present invention further perfects the existing cross-domain routing control solution, improves service experience for the user, and further facilitates application and development of the CS, WLAN and IMS networks.

### Brief Description of the Drawings

FIG. 1 is an implementation flowchart of a cross-domain routing control method in an example not covered by the present invention;
FIG. 2 is a flowchart of a cross-domain routing control signaling interaction in an embodiment of the present invention in which current call status information of a user is obtained by monitoring call status locally;
FIG. 3 is a flowchart of a cross-domain routing control signaling interaction in an example not covered by the present invention in which the current call status information of the user is obtained based on an event subscription-and-notification mechanism;
FIG. 4 is a flowchart of a cross-domain routing control signaling interaction in an example not covered by the present invention in which the current call status information of the user is obtained based on a status publication mechanism;
FIG. 5 is a flowchart of a cross-domain routing control signaling interaction in an example not covered by the present invention in which the current call status information of the user is obtained based on an instant query; and
FIG. 6 is a flowchart of a cross-domain routing control signaling interaction in an example not covered by the present invention in which the current call status information of the user is forwarded through a modifying a message.

### Detailed Description of the Invention

To make objectives, technical solutions and advantages of the present invention clearer, the following further describes the present invention in detail with reference to accompanying drawings.

The main idea of a cross-domain routing control method provided by the present invention is: when cross-domain routing of a new incoming call request is to be performed, current call status of a user in the two domains are obtained first, and an RPDP entity selects, as far as possible according to the known call status information, a domain that is currently active to perform subsequent routing of the new incoming call request. Therefore, a case in which incoming calls are delivered via the two different domains at the same time is avoided, and an existing supplementary service for a subsequent call in the same domain can be provided for the new incoming call request.

Several existing mechanisms adopted in embodiments of the present invention are introduced first, including USSD/SMS in the CS domain, SIP event subscription-and-notification mechanism and status publication mechanism in the IMS.

The USSD is a supplementary service introduced by GSM Phase 2 and may be initiated by either a terminal or a network. Similar to the short message service message, the USSD operation may also be sent during a call. But the difference from the short message service message is that the USSD is real time and connection oriented. In other words, during a USSD dialogue, a wireless connection is always maintained to provide a transparent channel without storing and transmitting in a middle entity. And multiple successive USSD operations may be supported during one USSD dialogue. Routings of the USSD operations are determined according to a service code (Service Code) in a message. An entity providing USSD applications retrieve service data of the message, process and respond according to service logic. Through the USSD, network operators may provide customized services for local users. The WCDMA CS domain inherits the USSD service.

It should be noted that, cdma2000 CS domain and PSTN do not support the USSD service. But either of the GSM, the WCDMA CS domain, the cdma 2000 CS domain and the PSTN supports the short message service.

The SIP event subscription-and-notification mechanism in the IMS is an SIP extension through which a SIP user agent may initiate a subscription of a specific event to another SIP user agent. The user receiving a subscription request returns a response. After interactions in form of request and respond, both parties finish negotiation of a valid period of the subscription. Then the user receiving the subscription request processes the subscription request according to certain policy, for example, whether the subscription request needs to be authorized. After the subscription request is authorized, if state of the specific event changes during the valid period determined after negotiation, the user receiving the subscription request sends a corresponding event notification to the user that initiates the subscription. During the valid period, the user that initiates the subscription may prolong or terminate the subscription by re-sending a subscription request; otherwise, the subscription will be automatically terminated when the negotiated valid period expires. By sending a subscription request with the valid period being set to 0, the subscription of a single notification only notifying the current state, that is, the query of the current state may be implemented.

The SIP status publication mechanism is another extension for completing initiative publication of a state. Through this extension, a client is allowed to publish event states of the client to an Event State Compositor which composites these states and sends, according to a subscription circumstance, a corresponding event notification to a subscriber.

The IP multimedia subsystem defined by either of 3GPP, 3GPP2 or TISPAN employs the SIP as an end-to-end session control protocol, thus supports the above SIP subscription-and-notification mechanism and the SIP publication mechanism.

In a voice service application environment in which multiple current communication system domains co-exist, when a user accesses an CS/IMS domain by using terminals of different access technologies, and when there is an incoming call request of a CS/IMS domain towards the user, according to information such as a routing policy made for the user, whether the user is reachable in different domains and a current call status of the user in different domains, the present invention uses a method for enhanced cross-domain routing control to select a delivering domain for the incoming call request. The method for enhanced cross-domain routing control is based on the existing technical solution and further performs processing in which the routing decision according to the current call status of the user in the CS/IMS domain, so as to adapt to the case in which a user equipment cannot perform two voice calls in the CS and the IMS domains at the same time due to only one audio I/O module, and continuously provide a processing requirement for a service feature related to the existing subsequent call handling during a call in the CS and the IMS domains.

Key technologies of this method of the present invention lie in how to obtain call status information of the user, and how to select a domain according to a known call status to perform subsequent routing. In respect of a mode based on a call-control protocol based interface in the prior art, the present invention provides a method for acquiring the call status by self-monitoring or by a means in which another network entity modifies a message to forward the call status; and in addition, a method for acquiring the call status provided by the present invention by locally maintaining and interacting-and-updating with another network entity, or instantly querying is applicable to the mode based on the call-control protocol based interface and the mode based on the non-call-control protocol based interface. The RPDP entity interacting with or querying another aware network entity may be implemented in the CS domain or the IMS domain by using a related mechanism of a USSD message or a short message service message or an SIP message. Further, as to different conditions in which the call status information in one domain or two domains can be obtained, the present invention provide a method for selecting as far as possible a domain which is most possible or already active as the domain via which the new incoming call is to be delivered. In addition, how to implement, in a case in which the RPDP entity is used as an independent logic entity in the CS/IMS domain, synchronous updating of the call status information of the user between the two entities is further considered. The synchronization is implemented through an internal interface of one physical entity, or through an external interaction method between different physical entities.

As described above, on the one hand, although the requirement of cross-domain selection is firstly proposed in 3GPP, the same requirement also exists between the circuit switched voice call service in the cdma 2000 CS domain or the PSTN and the VoIP service in the IMS accessed via various fixed/mobile IPCAN. Meanwhile, the GSM, the WCDMA CS domain and the cdma 2000 CS domain have similar network architectures, the intelligent networks in the PSTN, GSM, WCDMA and the cdma 2000 are basically the same, and the IP multimedia subsystem defined by different standards have similar architectures, that is, the IMS accessed via various fixed/mobile IPCAN have similar architectures. Therefore, the solution of cross-domain routing control in the prior art, the problem brought out by not considering the call status of the user when selecting a domain for subsequent delivery and the requirement of solving the problem are similar in above various scenarios. On the other hand, although the CS domain of cdma 2000 system and the PSTN network do not support the USSD service, either of the GSM, WCDMA system CS domain, cdma 2000 system CS domain and the PSTN network supports the short message service. And the IP multimedia subsystem defined by the 3GPP, 3GPP2 or the TISPAN employs the SIP as the end-to-end session control protocol. Therefore each of them supports the above SIP subscription-and-notification mechanism and the SIP publication mechanism. Although the WCDMA system is taken as an example in embodiments of the present invention, those skilled in the art should understand that, the solutions provided by embodiments of the present invention are also applicable for solving the problem of cross-domain routing control between the circuit switched voice call service in GSM, cdma 2000 CS domain or PSTN and VoIP service in the IMS accessed via various fixed/mobile IPCAN.

The 3rd generation mobile communication system includes a CS domain and an IMS domain. A user may register and use voice services in the two domains at the same time. As a prior art, a RPDP entity is introduced into the system. During a CS/IMS routing control, querying the RPDP entity for a routing decision is further performed. The RPDP entity completes the current routing decision according to current routing decision related information of the user in the CS/IMS domain and a pre-configured current routing policy which is stored in the RPDP entity, and then returns, according to the current routing decision, routing information determined according to the routing decision, and controls a routing control entity in the CS/IMS domain to complete subsequent routing control of the current call/session. In the present invention, while performing the routing decision, the RPDP entity not only considers the current routing policy and other related information, but also needs to refer to the call status of the user in the CS/IMS domain. The entity for completing routing decision query refers to a routing decision query entity.

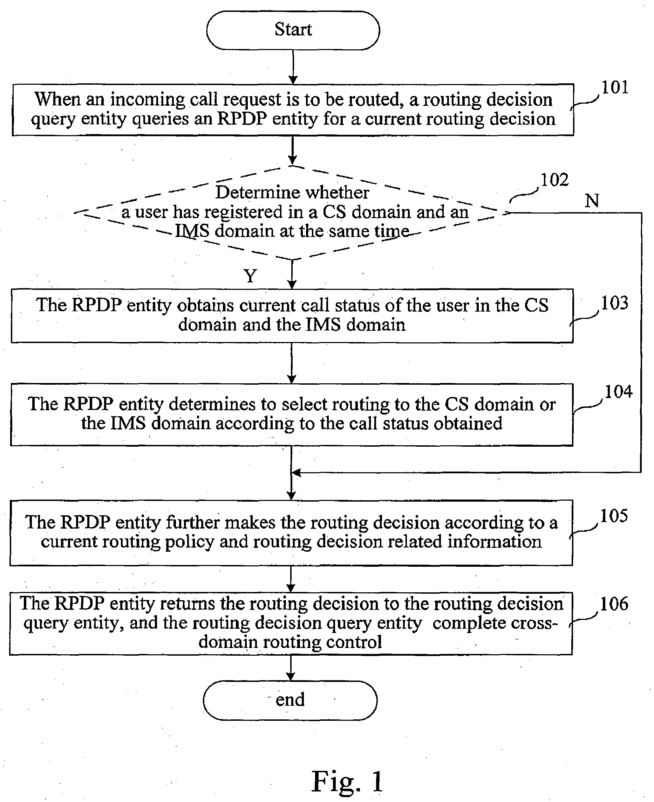

Main steps of the whole cross-domain routing control process in the present invention include querying, determining, and returning, where the key step is determining and decision-making. The decision needs to be made with reference to the current call status of the user, and therefore the step of determining and decision-making is subdivided into three sub-steps: obtaining status, selecting a domain, and making a decision. Optionally, it is with reference to determining a potential condition indicating whether the user registers in both two domains, the entire process is divided into six steps. The flowchart of an embodiment for cross-domain routing control is shown in FIG. 1.

Step **101**: when an incoming call request is to be routed, a routing decision query entity queries an RPDP entity for a current routing decision.

Step **102**: after receiving a routing decision query request, the RPDP entity determines whether the user has registered in both the CS domain and the IMS domain; if the user has registered in both the CS domain and the IMS domain, current call status of the user in the two domains should be considered and step **103** is performed; otherwise, only the routing policy needs to be considered, and step **105** is performed. In practical applications, step **102** is optional.

Step**103**: the RPDP entity obtains current call status of the user in the CS domain and the IMS domain, and then step **104** is performed. Because the RPDP entity needs to consider the call status of the user in the two domains to select the delivering domain, it is necessary to obtain the current call status of the user in the two domains by corresponding means.

Step **104**: the RPDP entity determines to select the CS domain or the IMS domain to deliver the incoming call request according to the call status obtained. The criterion of the selection is to deliver the subsequent call to a domain of the existing call as soon as possible.

Obtaining the current call status of the user in step 103 and domain selection process in this step are the key of the present invention.

Step **105**: the RPDP entity further makes a routing decision according to a current routing policy and routing decision related information. This step is a step of making a routing decision by the RPDP entity. It can be seen from this step that, if the current call status of the user in the two domains needs to be considered, the routing decision should be further made based on a result of the domain selection in step **104**. For example, if the CS domain is selected in step **104**, subsequent routing should be performed in the CS domain in this step; or if the CS domain is preferentially selected in step **104**, other conditions should be taken into consideration to make the routing decision for the domain selection in this step. In this way, the RPDP entity makes the routing decision according to the current routing policy and the routing decision related information, and with reference to the current call status of the user in the CS/IMS domain.

Step**106**: the RPDP entity returns the made routing decision and routing related information to the routing decision query entity, so that the routing decision query entity completes cross-domain routing control.

In the process described above, the most crucial steps are: how the RPDP entity obtains the current call status information of the user in different domains, and how the RPDP entity performs determining of domain selection according to the known call status. Four methods for obtaining the current call status information of the user are given hereafter, and three of them may further have several implementation schemes in respect of different domains and modes applied. Detailed criteria will be given to cover all possible scenarios that the call status in one of the two domains is known or the call statuses in both of the two domains are known to guide the determining of domain selection.

The detailed criteria of the determining of domain selection will be described first hereafter. In the embodiment shown in Fig. 1, the detailed criteria of the determining of domain selection according to the known call status information in step **104** may be:

When the RPDP entity obtains a call status in only one domain of the CS domain and the IMS domain, the RPDP entity judges the call status of the user in the one domain. If the call status in the one domain is active or in progress, the RPDP entity determines to select the one domain for subsequent routing; otherwise, if the call status in the one domain is idle, the RPDP entity preferentially selects the other domain for subsequent routing. The reason for such selection is that if the call status in only one domain is known and it is determined that the call status in the one domain is active or in progress, it can be affirmatively deduced that there is an existing call in the one domain, and an incoming call request needs to be delivered via the one domain; otherwise, it indicates that the call status in the one domain is idle, and it is possible that there is an existing call in the other domain, so that the new incoming call request is delivered through and routed to the other domain to avoid the problem that two calls are delivered via the two domains at the same time.

When the RPDP entity obtains the call statuses of the user in both the CS domain and the IMS domain, the RPDP entity judges whether the call statuses are idle in both the CS domain and the IMS domain. If the call statuses are idle in both the CS domain and the IMS domain, the RPDP entity selects one of the CS domain and the IMS domain for subsequent routing with the same priority; and otherwise, the RPDP entity selects the domain in which the call status is active or in progress for subsequent routing. The reason for such selection is that if the call statuses are idle in both the CS domain and the IMS domain, the new incoming call may be delivered via either domain without arousing the foregoing problem that two calls are delivered via two domains at the same time. Therefore, no selection is made and the RPDP entity performs the decision according to the routing policy. If the call status of the user is active or in progress in one domain of the CS domain and the IMS domain, the RPDP entity selects the one domain to deliver the incoming call. Certainly, theoretically, it is impossible that the call statuses in both the CS domain and the IMS domain are active or in progress.

In the following, analysis is performed according to four implementation solutions of obtaining the call status and different implementation manners of each solution. First, different implementation solutions are described according to whether the two modes are used.

For the mode based on the call-control protocol based interface, the RPDP entity obtains call status by monitoring and locally maintaining the call status, or the RODP obtains the call status through a solution in which the incoming call request passes through another aware network entity and the another aware network entity modifies the incoming call request first and forwards the call status information to the RPDP entity. And for the mode based on the non-call-control protocol based interface, the RPDP entity obtains the call status by performing interacting-and-updating or instant-querying with the aware network entity. Certainly, the two methods are also applicable to the mode based on the call-control protocol based interface.

The following several embodiments specifically provide technical details of the four implementation solutions.

Firstly, in the mode based on the call-control protocol based interface, the RPDP entity obtains the call status information by monitoring and locally maintaining. In other words, based on the embodiment shown in Fig.1, in the step 103, the RPDP entity obtains the call status by monitoring and maintains the call status information in the RPDP entity. The specific steps may include two sub-steps: when the communication system implements the routing decision query through the call-control protocol interface, the RPDP entity monitors a status and a handling process of a call request related to the user through the call-control protocol based interface; and then the RPDP entity updates the call status information stored in the RPDP entity upon establishing, and/or connecting and releasing of the relevant call of the user.

The RPDP entity implements the monitoring of the status and the handling process of the call/session which is triggered to the RPDP entity for routing decision query by utilizing an original mechanism of the call-control protocol based interface. For example, in the CS domain, if the call-control protocol based interface is a CAP interface between VMSC/GMSC and SCP, a gsmSCF which functions as the RPDP entity configures basic call status model event detection point of call answer and/or call disconnect at the VMSC/GMSC which functions as a gsmSSF, thereby implementing the monitoring of the status and handling process of the call. In the IMS domain, if the call-control protocol based interface is an ISC interface between an S-CSCF and an AS, the RPDP entity which functions as the AS keeps the RPDP entity in a signaling path by controlling in a Proxy mode and adding a domain name of the RPDP entity into a Record-Route header field, or by controlling in a back-to-back user agent (B2BUA) mode, thereby implementing the monitoring of the status and handling process of the call. Meanwhile, the RPDP entity updates the CS domain and/or IMS domain call status of the user stored in the RPDP entity when CS domain and/or IMS domain call is established, and/or connected, and released.

Secondly, based on the mode of the call-control protocol based interface, another aware network entity may modify the incoming call request message which passes through the aware network entity so as to forward the call status information to the RPDP entity. In other words, based on the embodiment shown in Fig.1, the route decision query request received by the RPDP entity in step 102 is actually the incoming call request message modified by the aware network entity. The RPDP entity obtains the call status information according to the incoming call request message. The specific process may include two steps: in the communication system for implementing cross-domain routing control, the incoming call request message passes through an AS monitoring the call status before the incoming call request message arrives at the RPDP entity, the AS which functions as the aware network entity modifies the incoming call request message according to the current call status information before forwarding the incoming call request message. Thus, when the RPDP entity finally receives the message, which is modified by the aware network entity, as the routing decision query request, the RPDP entity obtains the current call status information from the modified message.

The method of obtaining the call status of the user from the modified incoming call request described above is actually applied in the IMS. At this time, the call-control protocol based interface though which the routing decision query is performed is the ISC interface between the S-CSCF and AS in the IMS. In the existing IMS, the S-CSCF triggers service requests to corresponding ASs in an order according to initial filter criteria arranged with priority in user profile. When processing an incoming call request, if the priority of the initial filter criteria corresponding to the AS monitoring the call status is higher than that of the AS functioning as the RPDP entity, the incoming call request will be transferred to the AS monitoring the call status first. The AS monitoring the call status may modify the incoming call request according to the call status before transferring the incoming call request. Therefore, when the RPDP entity finally receives the message, which is modified by the aware network entity, as the routing decision query request, the RPDP entity obtains the current call status information from the modified message.

An interacting-and-updating method provided in the following is applicable to both the mode based on the call-control protocol based interface and the mode based on the non-call-control protocol based interface, that is, a method for performing interacting-and-updating with another aware network entity to obtain the call status information is used. Herein, the aware network entity refers to a network entity aware of the call status information of the user, for example, a Presence server, another application server or CAMEL service control function monitoring the call status, or a terminal of the user. Based on the embodiment shown in Fig. 1, in the step 103, when the call status change, the aware network entity notifies the RPDP entity of the change of the call status. The RPDP entity locally maintains the call status information, and updates the call status information according to the notification from the aware network entity. In a case in which the aware network entity is the UE, if a mechanism based on the IMS is adopted, the interacting-and-updating is performed after the user registers in the IMS; if a mechanism based on the CS is adopted, the interacting-and-updating is performed after the user finishes registration/location updating in the CS domain.

The interacting-and-updating process is that: the RPDP entity locally maintains the call status information of the user in CS/IMS domain. When the call status change, the aware network entity aware of the current call statues sends a notification to the RPDP entity to notify a change of the call status. The RPDP entity updates the call status of the user in the CS/IMS domain, which is stored in the RPDP entity, according to the status change notification. As for how to implement the interacting-and-updating described herein, the present invention proposes four schemes separately for the CS domain and the IMS domain: an SIP subscription-and-notification mechanism and an SIP publication mechanism which are used in the IMS domain; and a USSD/SMS based subscription-and-notification mechanism and a USSD/SMS based publication mechanism which are used in the CS domain.

The first scheme for implementing the interacting-and-updating is the SIP subscription-and-notification mechanism. Based on the SIP subscription-and-notification mechanism in the IMS, the RPDP entity subscribes to a relevant event in advance from the aware network entity aware of the current call status, and the specific stepsincludes:
Step **a1**: The RPDP entity sends an SIP SUBSCRIBE message to the aware network entity aware of the current call status to subscribe for a call status relevant event. The aware network entity aware of the current call status accepts the subscription, returns an acknowledgement to the RPDP entity, and finishes a negotiation of a valid period of the subscription during the process of subscription.
Step **a2**: During the valid period of the subscription, if detecting that the call status of the user in CS/IMS domain changes, the aware network entity aware of the current call status reports a status change event to the RPDP entity, and the RPDP entity returns an acknowledgement.
Step **a3**: Before the valid period of the subscription expires, the RPDP entity may send a new SUBSCRIBE message to the aware network entity aware of the current call status to update the subscription on demand. The aware network entity returns an acknowledgement after accepting the new SUBSCRIBE message, and finishes a re-negotiation and re-initiation of the valid period of the new subscription in such a process. Here, the updating, by the RPDP entity, the subscription on demand may be: determining that the user has not deregistered from the IMS, or only considering the domain selection logic of the RPDP entity regardless of the register status of the user.

The second scheme for implementing the interacting-and-updating is an SIP status publication mechanism. It is completed based on the SIP status publication mechanism in the IMS. That is, the aware network entity aware of the current call statues publishes, when the call status of the user in the CS domain and/or the IMS domain changes, a call status change event to the RPDP entity through an SIP PUBLISH message according to local settings. The RPDP entity records the call status, returns an acknowledgement and updates the call status information maintained by the RPDP entity.

The third scheme for implementing the interacting-and-updating is a USSD/SMS subscription-and-notification mechanism. Based on the USSD/SMS application in the CS domain completes the subscription and notification of a related event. Specific steps are included:
Step **b1**: The RPDP entity sends a USSD/SMS message to the aware network entity aware of the current call status to subscribe to a call status relevant event.
Step **b2**: When detecting that the call status of the user in the CS domain and/or the IMS domain changes, the aware network entity reports a call status change event to the RPDP entity through a USSD/SMS message. The RPDP entity updates the call status information of the user locally maintained.

The fourth scheme for implementing the interacting-and-updating is a USSD/SMS status publication mechanism, which is similar to the SIP status publication mechanism. However, the USSD/SMS status publication mechanism is implemented based on the USSD/SMS application in the CS domain. When detecting that the call status of the user in the CS/IMS domain changes, the aware network entity aware of the current call status publishes a call status change event to the RPDP entity through the USSD/SMS according to local settings. The RPDP entity updates the call status information maintained by the RPDP entity and returns an acknowledgement.

It can be understood by those skilled in the art that other schemes may also be adopted other than the four schemes described above for the interacting-and-updating process between the RPDP entity and the aware network entity in the CS domain or the IMS domain without affecting the substance or the protection scope of the present invention.

Finally, another method applicable for both the mode based on the call-control protocol based interface and the mode based on the non-call-control protocol based interface is given, that is, the instant-querying method. Based on the embodiment shown in Fig.1, when the RPDP entity needs to obtain the current call status information of the user, the RPDP entity obtains the call status information by instantly querying another aware network entity. That is, the RPDP does not store the call status information of the user in CS/IMS domain. Instead, the RPDP entity queries the aware network entity for the call status when the RPDP entity needs to obtain the call status. The aware network entity returns the current call status information to the RPDP entity.

The instant-querying method also has two implementation schemes in the CS domain and the IMS domain, that is, an SIP one-off subscription and a USSD/SMS query.

The instant querying is implemented based on an SIP one-off subscription-and-notification mechanism based on the IMS, which includes: when the RPDP entity needs to obtain the current call status of the user, the RPDP entity sends an SIP SUBSCRIBE message to the aware network entity aware of the current call status to subscribe to a call status relevant event. The aware network entity accepts the subscription, returns an acknowledgement, and returns the current call status information to the RPDP entity. The aware network entity does not initiatively notify the RPDP entity when the call status changes and the RPDP entity need not locally maintain the call status information.

Based on the USSD application in CS domain, the RPDP entity completes a query for the related event, which includes: when the RPDP entity needs to obtain the current call status of the user, the RPDP entity sends a USSD/SMS message to the aware network entity aware of the current call statuses to query for the call status. Then, the aware network entity reports the current status information through another USSD/SMS message to the RPDP entity. Similarly, the aware network entity does not initiatively notify the RPDP entity when the call status changes and the RPDP entity need not locally maintain the call status information.

It can be understood by persons skilled in the art that, other schemes may be adopted for performing the instant-querying other than the two schemes provided by the embodiments of the present invention, to achieve the purpose of the present invention without affecting the substance or the protection scope of the present invention.

In the above four methods of obtaining the call status of the user in different domains, the RPDP entity and the aware network entity may be co-located in a same physical entity. In this case, the RPDP entity obtains the call status information from the aware network entity through an internal interface.

So far, the specific implementation process for the enhanced cross-domain routing control method of the present invention is already described above, and specific implementation means and technical details of the key steps such as the obtaining of the call status and the domain selection criteria are also described. In addition, the present invention also considers a situation that the RPDP entity is implemented by two independent logic entities in the CS domain and the IMS domain. In this case, the two entities need to synchronize the call status information of the user. Therefore, based on the embodiment shown in Fig. 1, when the logic entity in the CS domain and the logic entity in the IMS domain for the RPDP entity are mutually independent, the synchronization mechanism of the call status information is configured between the two logic entities.

Furthermore, the two logic entities of the RPDP entity in the CS domain and the IMS domain may be co-located in the same physical entity or located in two different physical entities. If the two logic entities are co-located in the same physical entity, the interface between the two logic entities is an internal interface through which the synchronization mechanism of the call status information is implemented. If the two logic entities are located in two different physical entities, the foregoing interaction is performed through any one of SIP, CAP, wireless intelligent network protocol, intelligent network application protocol, USSD, SMS, or through other self-defined method.

In addition, according to different implementation scheme, the synchronization mechanism may include two schemes: notifying upon change and querying on demand. The scheme of notifying upon change includes: sending, by either of the two synchronization parties, a notification to the other party upon finding the change of the call status information. The other party updates the user status information according to the notification. The scheme of querying on demand includes: when either of the two synchronization parties queries the other party for the call status information when necessary, the other party returns the call status information after receiving the query.

It can be understood by those skilled in the art that the two interface implementation manners and the two synchronization mechanism implementation manners described above may be replaced by other feasible interfaces and synchronization mechanisms, which can similarly achieve the objectives of the present invention without affecting the substance or the protection scope of the present invention. For example, when the two logic entities are co-located in the same physical entity, the two logic entities may access a shared data field to obtain the synchronized call status information.

The overall flowchart of performing signaling interaction of enhanced cross-domain routing control by using various interfaces and various interaction mechanisms are employed.

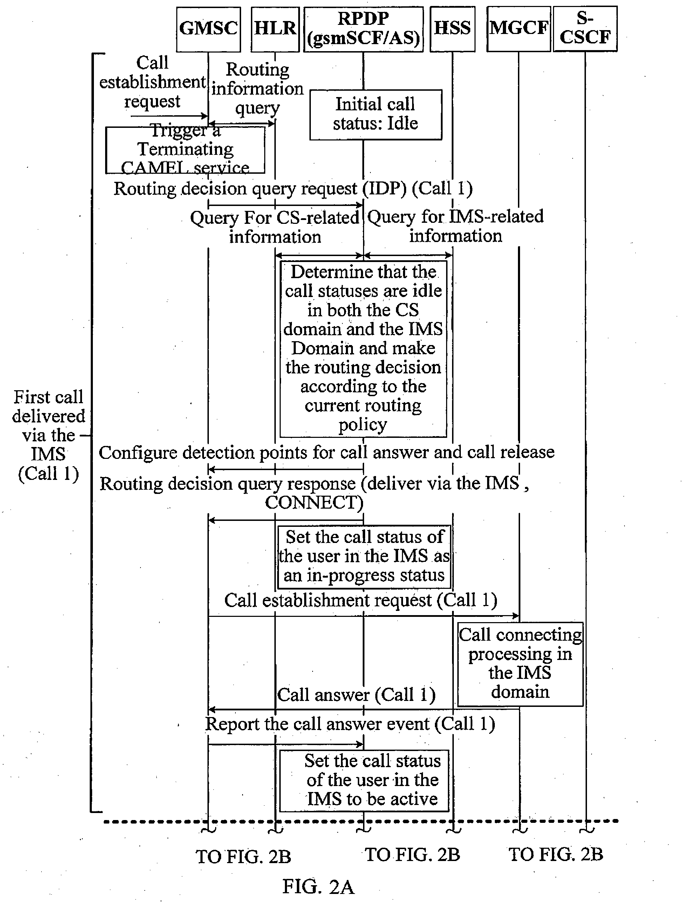

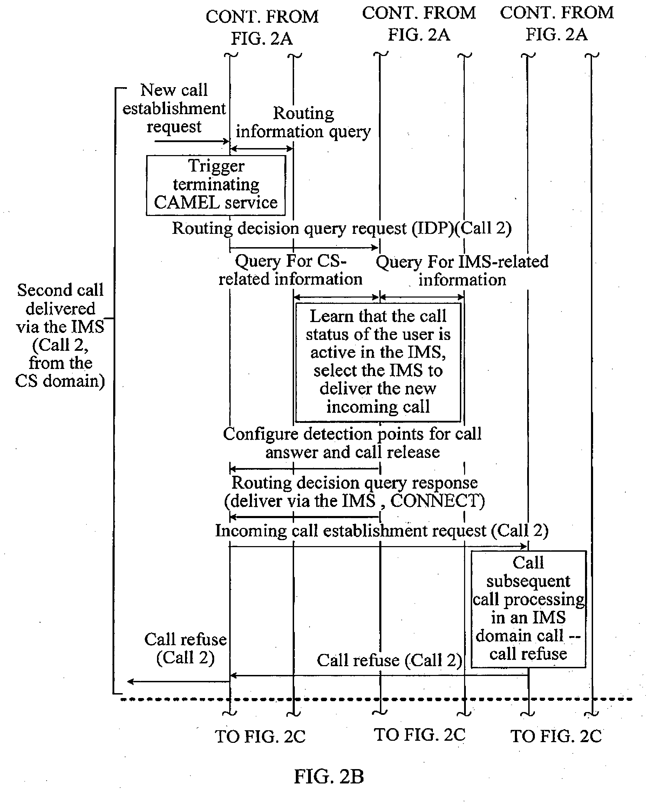

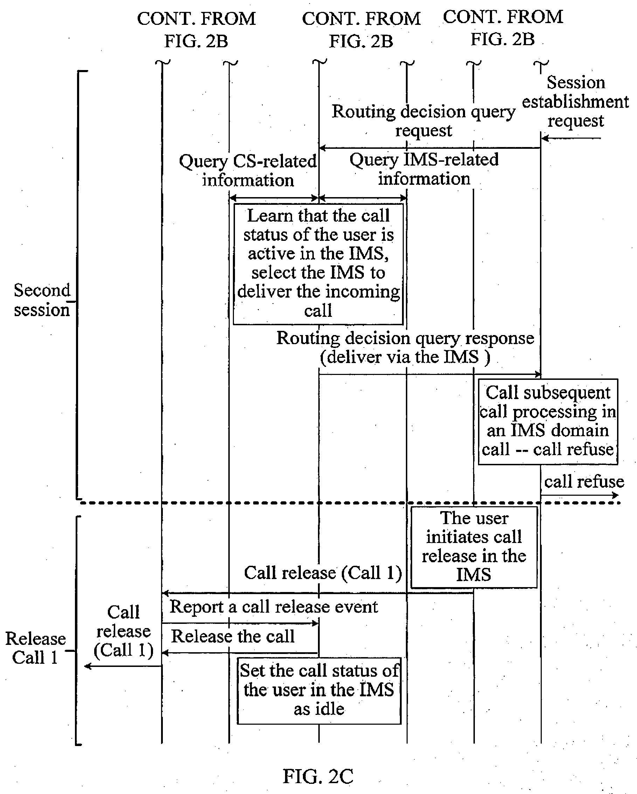

FIG. 2 shows an overall flowchart of a cross-domain routing control solution in which current call status information of the user is obtained by locally monitoring the call status, in the mode based on the call-control protocol based interface.

Upon the receipt of an incoming call establishment request, a GMSC queries an HLR of a callee for routing information. The HLR returns terminating CAMEL subscription information of the callee according to user subscription. The GMSC triggers a terminating CAMEL service according to the terminating CAMEL subscription information and thus initiates the query to the RPDP entity which functions as the gsmSCF for the routing decision through the CAP interface. Although the protocols adopted by the GSMC for interaction with the HLR and the intelligent network service control function are different in GSM, WCDMA system CS domain and cdma2000 system CS domain, the process and capability are similar. In the PSTN, although the routing query process is not required and the intelligent service of the user is triggered by a local exchanger of the user instead of the GMSC, the service control process and the control capability of the interaction with the fixed intelligent network service control function are similar. Hereinafter only the WCDMA system CS domain is taken as an example, other scenarios are not repeated herein.

The RPDP entity interacts with the HLR/HSS to query for the current register statuses of the user in the CS/IMS domain. When the user has registered in both the CS/IMS domain, and the RPDP entity further judges the call status information of the user in the two domains stored in the RPDP entity. It should be noted that, in this embodiment, optionally, determining the register statuses of the user in the two domains is processed first. Because the call status can never be active in a domain in which the user has not registered. Therefore, the added optional determination can be seen an optimized implementation of the embodiment of the present invention.

Because the call status of the user is initialized to be idle, the RPDP entity makes the routing decision according to the current routing policy. For example, if the RPDP entity determines to select the IMS to deliver the incoming call, the RPDP entity returns a redirection number pointing to a CS/IMS interworking gateway MGCF to the GMSC through a Connect message. In order to monitor the entire handling process of the incoming call, before returning the redirection number, the RPDP entity issues a request report basic call state model event (RRBE) message to the GMSC to configure basic call state model event detection points for call Failure, call Abandon, call Answer, and call Disconnect events, where the detection point for the call Answer event is optional. And then, with reference to the made routing decision, the RPDP entity changes the call status of the user in the IMS as in progress. If the detection point for the call Answer event is not configured, the RPDP entity directly configures the call status of the user in the IMS to be active.

The GMSC delivers, according to the redirection number, the incoming call to the CS/IMS interworking gateway MGCF which controls subsequent routing of the incoming call to the IMS. If the detection point of call Answer event has been configured, the GMSC reports, upon the receipt of the call Answer event, the call Answer event to the RPDP entity which functions as the gsmSCF. The RPDP entity changes the call status of the user in the IMS to be active.

Thereafter, when receiving a new incoming call/session establishment request, the GMSC or S-CSCF queries the RPDP entity for the current routing decision in respective manners. For the GMSC, the query is performed by triggering a terminating CAMEL service while the RPDP entity functions as a gsmSCF. For the S-CSCF, the query is performed by triggering a terminating service in the IMS while the RPDP entity functions as an AS. Furthermore, the two logic entities of the RPDP entity respectively in the CS domain and the IMS interact with each other through an internal or external interface to synchronize the call status information.

The RPDP entity interacts with the HLR/HSS to query for the register statuses of the user in the CS/IMS domain. If the user has registered in both the CS /IMS domain, the RPDP entity further judges the locally stored call status of the user in the two domains. Because the call status of the user in the IMS has been changed to be active, the RDPD entity determines that the current routing decision is routing in the IMS, and returns a corresponding instruction and routing information to the GMSC/S-CSCF.

The GMSC/S-CSCF performs subsequent routing to the IMS according to the instruction and information. For example, if new incoming call/session is determined to be refused in the subsequent call handling in the IMS domain, the GMSC/S-CSCF separately returns a call refuse message to a caller to terminate the call/session handling.

Subsequently, the user releases the previous call (Call 1) in the IMS. After receiving a call release message, the GMSC reports the call Disconnect event to the RPDP entity which functions as the gsmSCF. The RPDP entity changes the call status of the user in the IMS to be idle and instructs the GMSC to continue with the call release. Then the GMSC continues with the call release.

It should be noted that the embodiment shows the process in which the RPDP entity that functions as the gsmSCF sends a request report basic call state model event (RRBE) message to the GMSC which functions as the gsmSSF to configure corresponding basic call status model event detection points so as to monitor the status and handling process of the incoming call. In order to monitor the outgoing call status in the CS domain, the VMSC where the user currently locates functions as the gsmSSF and triggers, according to the subscription data of the user, intelligent service by establishing a call control connection to the RPDP entity which functions as the gsmSCF. And the RPDP entity which functions as the gsmSCF sends to the VMSC which functions as the gsmSSF the RRBE message to configure corresponding basic call status model event detection points including call Failure, caller Abandon, call Answer (optional) and call Disconnect. The VMSC which functions as the gsmSSF reports the call events to the RPDP entity which functions as the gsmSFC during corresponding call process according to the configurations, and the RPDP entity performs status update operation accordingly. The process is also performed based on existing CAMEL capabilities and will not be repeated herein.

In addition, when the routing decision query for the first call is performed in the IMS, the process is basically identical, and the difference lies in that: the S-CSCF assigned to the user triggers the call to the RPDP entity which functions as an AS to establish a call control connection for both the incoming call and the outgoing call, then the RPDP entity which functions as an AS keeps the RPDP entity in the signaling path in a manner of performing controlling in the Proxy mode and adding the domain name of the RPDP entity into the Record-Route header field or in a manner of performing controlling in the B2BUA mode, so as to monitor the entire session process in the IMS domain.

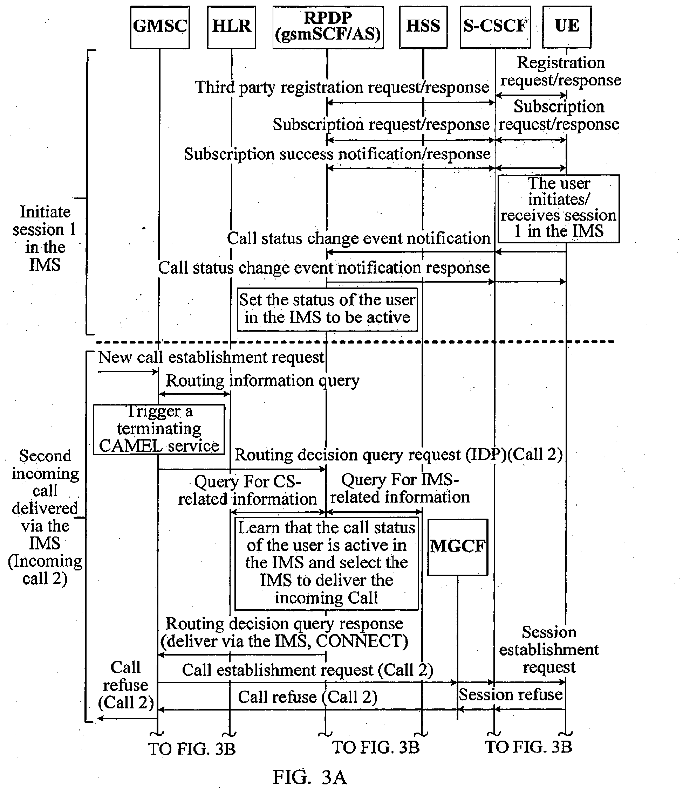

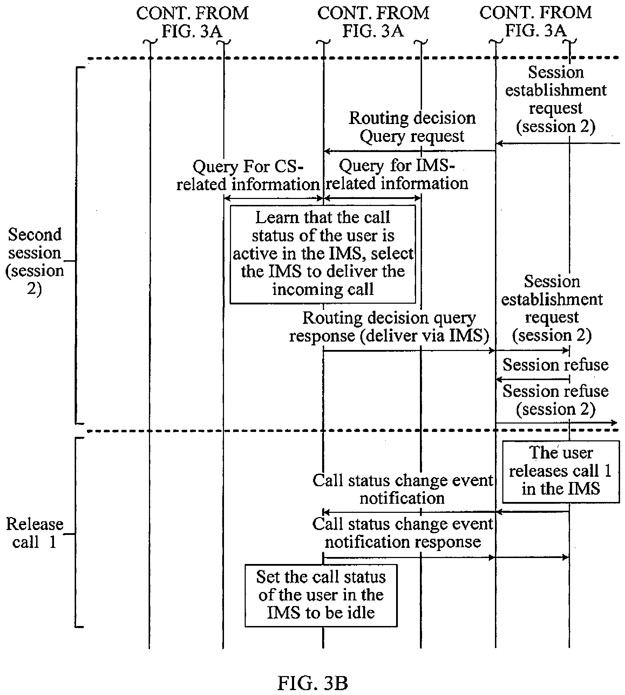

Fig. 3 shows an overall flowchart of a cross-domain routing control solution in which current call status information of the user is obtained by performing interacting-and-updating with an aware network entity, in the mode based on the call-control protocol based interface, where a terminal of the user is used as an aware network entity, and the interacting-and-updating is implemented by using the status event subscription-and-notification mechanism.

It differs from Fig. 2 in that, the cross-domain routing control herein is implemented based on an interacting-and-updating process and locally maintaining of the call status. The interacting-and-updating process is implemented by using the SIP subscription-and-notification mechanism. When the user registers in the IMS, the RPDP entity which functions as an AS subscribes to a call status relevant event to the user equipment according to a third party registration request. Because the process herein is also based on the call-control protocol based interface, the subsequent call/session process in the CS/IMS is similar to that shown in Fig. 2.

When the user registers in the IMS, after returning a response confirming the success of registration to the user, the S-CSCF initiates a third party registration to the RPDP entity which functions as an AS according to an initial filter criteria in the subscription data of the user. The RPDP entity which functions as an AS returns a success response to the S-CSCF and initiates a call status relevant event subscription to the user equipment, where the event carries an initial valid period of subscription. The user equipment returns a call status relevant event subscription response carrying the confirmed valid period to complete the negotiation of the valid period of the subscription, and sends an event subscription success notification. Subsequently, when the user initiates/receives a session in the IMS domain or CS domain, the user equipment sends, according to the previous subscription, a call status change event notification to the RPDP entity which functions as an AS. Hereinafter, the case that the user initiates/receives a session in the IMS is taken as an example. The RPDP entity changes the call status of the user in the IMS to be active.

Thereafter, when receiving a new incoming call/session establishment request, the GMSC or the S-CSCF queries the RPDP entity for the routing decision. For the GMSC, the query is performed by triggering a terminating CAMEL service while the RPDP entity functions as a gsmSCF. And for the S-CSCF, the query is performed by triggering a terminating service in the IMS while the RPDP entity functions as an AS. Furthermore, the two logic entities of the RPDP entity in the CS domain and the IMS domain interact with each other through an internal or external interface to synchronize the call status information.

The RPDP entity interacts with the HLR/HSS to query the register statuses of the user in the CS/IMS domain. If the user has registered in both the CS/IMS, the RPDP entity judges the locally stored call status information of the user in the two domains. Because the call status of the user in the IMS has been changed to be active, the RDPD entity determines that the current routing decision is routing in the IMS domain, and returns a corresponding instruction and routing information to the GMSC/S-CSCF.

The GMSC/S-CSCF performs subsequent routing to the IMS according to the instruction and routing information. Herein, the incoming call/session is determined to be refused in the subsequent call handling in the IMS domain, and the GMSC/S-CSCF separately returns a call refuse message to the caller to terminate the call/session handling.

Subsequently, the user releases the previous call in the IMS domain. The user equipment sends, according to the previous subscription, a call status change event notification to the RPDP entity which functions as an AS. The RPDP entity changes the call status of the user in the IMS to be idle.

It should be noted that, herein the SIP subscription-and-notification mechanism is adopted and the subscription is initiated by the AS upon receiving the third party registration request when the user registers. Subscriptions initiated at other time are also applicable. For example, the AS initiates the subscription upon receiving an instruction of the operator if the user has registered. In addition, the AS subscribing for the call status relevant event to the user equipment is adopted herein, and the AS may also subscribe to another network entity aware of the user call status, for example, a Presence server or another gsmSCF or AS monitoring the entire call process of the user in the CS domain and/or IMS domain.

Herein, the notification of the status change event is implemented in the SIP subscription-and-notification mode, the notification of the status change event may also be implemented in the SIP status publication mode, or be implemented by using the USSD/SMS in CS domain based subscription-and-notification mechanism or the USSD/SMS in CS domain based status publication mechanism. The subscription-and-notification or status publication mechanism based on USSD/SMS in CS domain differs from the implementation based on the SIP mainly in that: the RPDP entity and the network entity in charge of notification/publication of the call status change event shall provide USSD/SMS applications, and interact with each other through the USSD/SMS in the CS domain carrying corresponding subscription-and-notification or status publication instead of SIP messages in the IMS. The handling logics are basically the same.

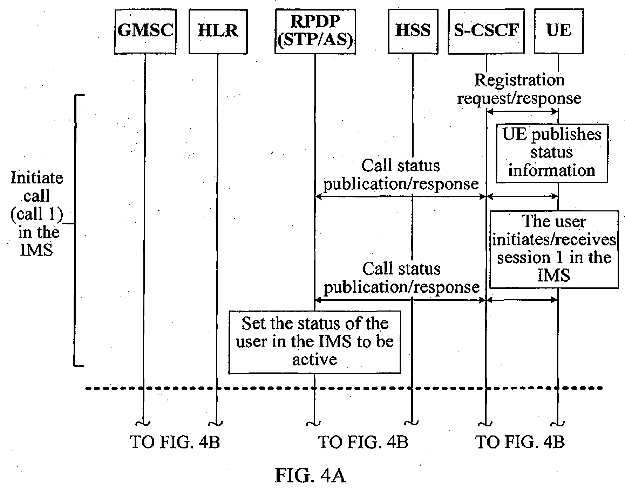

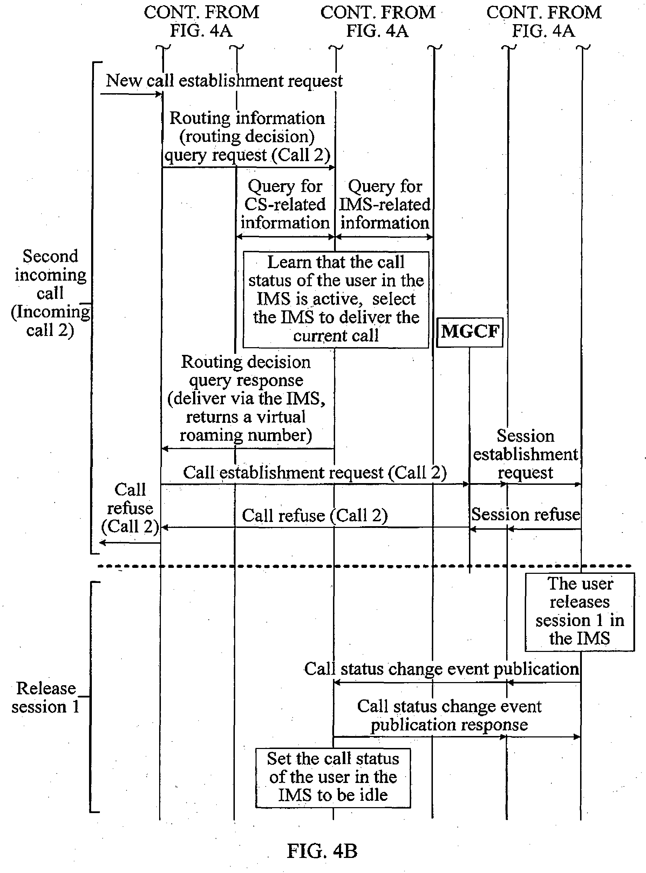

Fig. 4 shows an overall flowchart of a cross-domain routing control solution in which current call status information of the user is obtained by performing interacting-and-updating with an aware network entity, in the mode based on the non-call-control protocol based interface, where the interacting-and-updating is implemented by using the status publication mechanism.

The implementation solution of cross-domain routing control by locally maintaining the call status based on the status change notification is also used herein. It is different from the Fig. 3 in that, the status change notification is implemented by using the SIP status publication mechanism, and the user equipment publishes the current call status to the RPDP entity which functions as an AS according to presetting after IMS registration is completed and when the call status changes.

In addition, unlike the embodiments shown in FIG. 2 and FIG. 3, the embodiment shown in FIG. 4 uses the second mode based on the non-call-control protocol interface in the CS domain, that is, the RPDP entity which functions as an STP intercepts the routing information query message sent from the GMSC in the CS domain to the HLR, so as to complete the current routing decision query and implement routing control according to the current decision.

After the user has registered in the IMS, the user equipment publishes, according to configuration, the current status (idle) to the RPDP entity which functions as an AS. The RPDP entity returns a call status publication response to the user equipment and sets the call status of the user in the IMS to be idle. When the user initiates/receives a session in the IMS subsequently, the user equipment publishes, according to the configuration, a change of the call status to the RPDP entity which functions as an AS. The RPDP entity returns a call status change publication response and changes the call status of the user in the IMS to be active.

After that, when the GMSC receives a new call establishment request, the GMSC queries the HLR of the callee for the routing information, the RPDP entity which functions as an STP intercepts the routing information query message, furthermore determines that the current routing decision is routing in the IMS according to the register statuses of the user in the two domains and the call status of the user in the IMS, and directly returns a corresponding instruction and routing information to the GMSC. The GMSC performs subsequent routing to the IMS according to the instruction and the information. If the new incoming call, like that in the Fig. 3, is refused in the subsequent handling process in the IMS-domain-based call, the GMSC returns a call refuse message to the caller and terminates the handling of the new incoming call.

Subsequently, the user releases the previous call (Call 1) in the IMS, publishes, according to the configuration, the call status change event to the RPDP entity which functions as an AS. The RPDP entity returns a call status change event publication response and changes the call status of the user in the IMS to be idle.

It should be noted that, herein, the user equipment publishes the call status to the RPDP entity which functions as an AS, and another network entity aware of the user call status, such as a Presence server or another gsmSCF or an AS monitoring the entire call process of the user in the CS domain and/or IMS domain, can also publish the call status to the RPDP entity which functions as an AS.

In addition, the notification of the status change event is implemented by using the SIP status publication mechanism. The notification of the status change event may also be implemented in the SIP subscription-and-notification mode, or be implemented by using the USSD/SMS in CS domain based subscription-and-notification or status publication mechanism. The subscription-and-notification or status publication mechanism based on USSD/SMS in CS domain differs from the implementation based on the SIP mainly in that: the RPDP entity and the network entity in charge of notification/publication of the call status change provide USSD applications, and interact with each other through the USSD in the CS domain carrying corresponding subscription-and-notification or status publication instead of SIP messages in the IMS. The handling logics are basically the same.

Furthermore, the embodiments shown in Figs. 3 and 4 are implemented under the mode based on the non-call-control protocol based interface and the mode based on the non-call-control protocol based interface respectively, and illustrate the method of cross-domain routing control in which the current call status information of the user is obtained by querying with the aware network entity. It can be concluded from the foregoing description that the process in which the current call status information of the user is obtained by interacting-and-updating with the aware network entity is independent of the type of the interface between the RPDP entity and the routing decision query entity. Therefore the technical scheme and the applications in which the current call status information of the user is obtained by interacting-and-updating with the aware network entity are applicable to the method of domain selection implemented in both the mode based on the non-call-control protocol based interface and the mode based on the non-call-control protocol based interface.

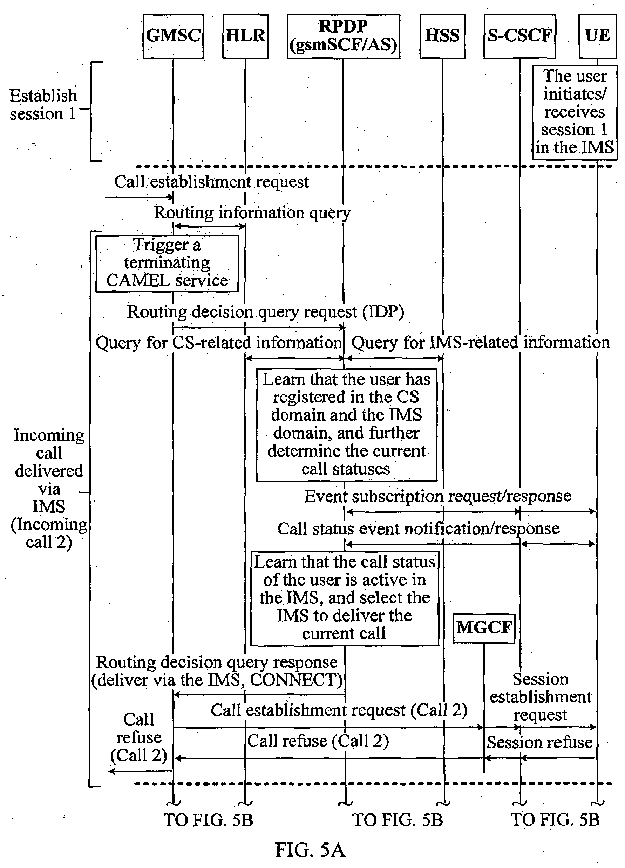

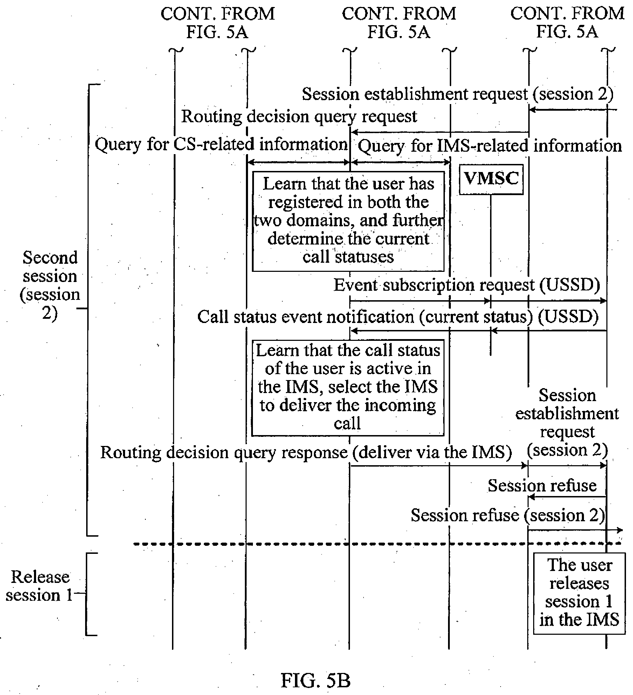

Fig. 5 shows an overall flowchart of a cross-domain routing control solution in which current call status information of the user is obtained by instantly querying an aware network entity.

Unlike the embodiment shown in Fig. 4, herein an implementation scheme of implementing cross-domain routing control by instantly querying the call status, and a manner based on the SIP in the IMS domain and a manner based on the USSD/SMS in the CS domain are provided to complete querying the user equipment.

This figure differs from the foregoing figures only in the obtaining of the call status, which is applicable for the cross-domain routing control solution based on the call-control protocol based interface or the non-call-control protocol based interface. In the embodiment shown in Fig. 5, for the processing of subsequent call/session, the non-call-control protocol based interface is used for implementation in the CS, and the handling process is the same as that in FIG. 4; and the call-control protocol based interface is used for implementation in the IMS, and the handling process is the same as that in FIG. 2 and FIG. 3.

The GMSC or S-CSCF receives a call/session establishment request, before that, the user has initiated/received one session in the IMS domain. The call status is active. Unlike the Fig. 4, the notification or publication of the status change is not performed at this time when the status of the user in the IMS is changed to be active. The GMSC or the S-CSCF initiates a query for the current routing decision in respective original manners. The GMSC queries the HLR for the routing information, and the RPDP entity which functions as an STP intercepts the routing information query message. For the S-CSCF, the query is performed in a manner of triggering a terminating service in the IMS, and the RPDP entity functions as an AS. In the instant-querying manner, the RPDPs in the CS and the IMS that function as two independent logic entities perform independent querying, and do not need to perform synchronization of the foregoing call status information by using an internal or external interface between the logic entities.

The RPDP entity interacts with the HLR/HSS to query the current register statuses of the user in the CS/IMS domain. After learning that the user has registered in both the CS/IMS domain, the RPDP entity further queries the user equipment for the current call status of the user in an SIP one-off subscription-and-notification manner or USSD/SMS manner. Based on a result of the query (for example, active in the IMS), the RDPD determines that the current routing decision is routing in the IMS domain, and returns a corresponding instruction and routing information to the GMSC/S-CSCF.

The GMSC/S-CSCF performs subsequent routing to the IMS domain according to the instruction and routing information. Herein, the incoming call/session is determined to be refused in the subsequent call handling in the IMS domain, and the GMSC/S-CSCF separately returns a call refuse message to the caller to terminate the call/session handling.

Subsequently, the user releases the previous call (Call 1) in the IMS, and the status turns to be idle. Unlike the condition in the foregoing figures, the notification or publication of the status change is not performed in this case.

It should be noted that, herein a manner of querying the user equipment for the current call status is used. Based on the same mechanism, the RPDP entity may also query another network entity aware of the call status of the user, such as a Presence server or another gsmSCF or AS monitoring the entire call process of the user in the CS domain and/or IMS domain, to query for the current call status.

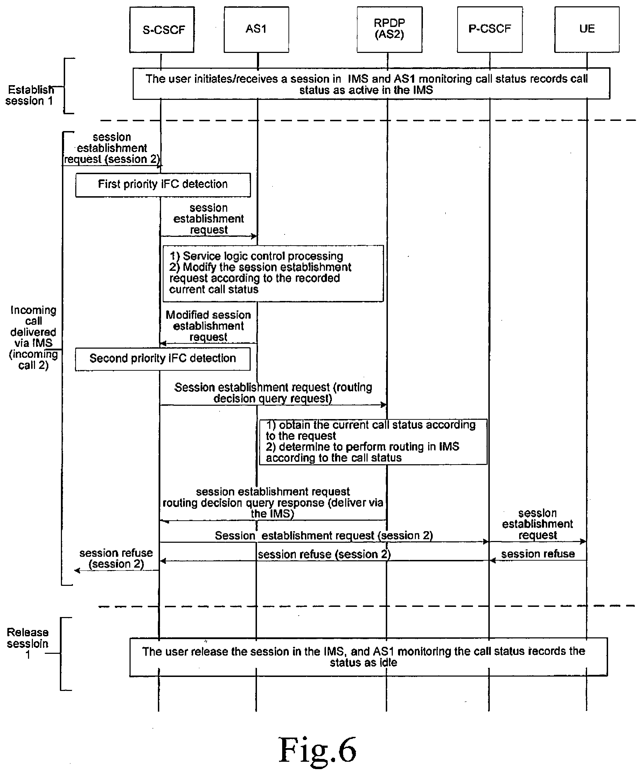

Finally, with reference to the overall flowchart of a cross-domain routing control solution shown in Fig. 6, the cross-domain routing control solution in which an aware network entity modifies an incoming call request message passing through the aware network entity first and transfers call status information to the RPDP entity is illustrated.

The method shown in Fig. 6 differs from the embodiments shown in the foregoing figures in the obtaining of the call status. In addition, the method shown in Fig. 6 is only applicable to the mode based on the call-control protocol based interface in the IMS. For the processing of subsequent call/session, the handling process of the Fig. 6 is the same as the IMS process part shown in Figs 2, 3 and 5.

As shown in Fig. 6, the S-CSCF receives a call/session establishment request. Before that, the user has already initiated/received one session in IMS domain. The user status is stored in an application server monitoring the call status, and the user status is active in the IMS domain. Unlike the embodiment shown in Fig. 4, the AS which functions as the aware network entity does not notify the RPDP entity of the call status change event or publish the call status change event to the RPDP entity, and the RPDP entity does not need to store the call status information of the user in the RPDP entity.

In the existing IMS domain, the S-CSCF triggers service requests to corresponding ASs in order according to the initial filter criteria arranged with priorities in the user profile. In this embodiment, for the call/session establishment request received by the S-CSCF, the priority of the initial filter criteria corresponding to the AS monitoring the call status is higher than that of the AS functioning as the RPDP entity. Therefore, the subsequent incoming call/session establishment request message will be transferred by the S-CSCF to the AS monitoring the call status first. After completing the service logic process, the AS monitoring the call status modifies the incoming call/session establishment request message according to the stored current call status information of the user and then transfers, according to existing process, the incoming call/session establishment request message to the S-CSCF for subsequent process.

Because the SIP protocol is well extendable, the above modification may be implemented by AS adding or modifying a specific existing SIP header field or extension of existing SIP header field, for example, a Location header field defined by draft-ietf-sip-location-conveyance. The modification of the incoming call establishment request may also be implemented by adding a newly-defined SIP header field, or by inserting corresponding information into the body of the SIP message.

Therefore, when the S-CSCF transfers the modified call/session establishment request message to the AS that functions as the RPDP entity to query the routing decision according to the match of the initial filter criteria with a lower priority level, unlike the embodiment shown in Fig. 5, the RPDP entity does not need to query the aware network entity for the call status information, but directly obtains the call status information from the message which is modified by the aware network entity and is taken as a routing decision query request. According to the call status information obtained, e.g., active in the IMS domain, the RPDP entity determines that the current routing decision is routing in the IMS domain, and returns corresponding instruction and routing information to the S-CSCF.

The S-CSCF performs subsequent routing to the IMS domain according to the instruction and routing information. Herein, the incoming call/session is determined to be refused during the subsequent handling in the IMS domain, and the S-CSCF separately returns a call refuse message to the caller to terminate the handling process of the incoming call/session.

Subsequently, the user releases the previous call (Call 1) in the IMS domain and the call status turns to be idle. Unlike the embodiment shown in Fig. 4, the AS which monitors the call status and functions as the aware network entity does not notify the RPDP entity of the status change or publish the status change to the RPDP entity.

All of the GSM system, WCDMA system CS domain, cdma2000 system CS domain and PSTN network can be used to provide circuit switched services and can be referred to as circuit switched networks. Similarly, the IMS defined by varieties of standardization organizations including 3GPP, 3GPP2 and TISPAN have basically consistent architectures. Therefore the IMS domain may include the IMS accessed via various fixed/mobile IPCAN defined by varieties of standardization organizations including 3GPP, 3GPP2 and TISPAN.

In a word, the foregoing description is only the preferred embodiments of the present invention and is not for use in limiting the protection scope thereof.

## Claims

1. A method of domain selection for routing control, applied in a communication system comprising a Circuit Switched, CS, network and an IP Multimedia Sub-system, IMS, wherein a routing policy decision point, RPDP, for storing routing policy information is configured in the communication system, and the method comprises:
receiving, by the RPDP, a query from a routing decision query entity querying a routing decision when the routing decision query entity routes an incoming call (101) for a user;
making, by the RPDP, a routing decision according to a routing policy, routing decision related information and call status of an existing call of the user in any one or both of the CS network and the IMS;
returning, by the RPDP, routing information to the routing decision query entity according to the routing decision (106); and
performing routing control by the routing decision query entity,
wherein the making a routing decision according to a routing policy, routing decision related information and call status of the existing call of the user in any one or both of the CS network and the IMS comprises:
obtaining, by the RPDP, the call status of the existing call of the user in any one or both of the CS network and the IMS (103);
determining, by the RPDP, to route the incoming call to the CS network or the IMS according to the call status obtained (104); and
making, by the RPDP, the routing decision according to the determination, the routing policy and the routing decision related information (105),
wherein the system adopts a mode based on a call-control protocol based interface, in the obtaining step, the RPDP obtains the call status of the existing call of the user in the CS network and the IMS domain by monitoring the call status and locally maintains the call status information, and wherein the method further comprises:
monitoring, by the RPDP, a status and a handling process of an incoming relevant call request of the user via the call-control protocol based interface; and
updating, by the RPDP, call status information stored in the RPDP upon establishing, and/or connecting, and releasing the relevant call of the user.

2. The method according claim 1, wherein the RPDP obtains the call status in only one domain of the CS and the IMS domains; and the determining to route the incoming call request to the CS network or the IMS domain according to the call status in the determining step specifically comprises: determining the call status of the user in the one domain, if the call status is active or in progress, selecting the one domain to perform subsequent routing, and if the call status is idle, preferentially selecting the other domain to perform subsequent routing; or
the RPDP obtains the call statuses in both of the CS network and IMS domain; and the determining to route the incoming call request to the CS domain or the IMS domain according to the call status in the determining step specifically comprises: determining whether the user is in an idle state in both of the CS network and the IMS domain, if the user is idle in both of the CS network and the IMS domain, selecting one of the domains to perform subsequent routing with equalized priority, and otherwise, selecting a domain in which the user is in an active or in-progress state to perform subsequent routing.

3. The method according to claim 1, wherein a logic entity in the CS network and a logic entity in the IMS domain for the RPDP are mutually independent; and the method further comprises:
configuring a synchronization mechanism of the call status information between the two mutually independent logic entities.

4. The method according to claim 3, wherein the logic entity in the CS network and the logic entity in the IMS domain for the RPDP are located in a same physical entity, the synchronization mechanism of the call status information is implemented through an internal interface; or
the logic entity in the CS network and the logic entity in the IMS domain for the RPDP are located in different physical entities, the synchronization mechanism of the call status information is implemented through signaling interaction using any one of: an SIP, a customized application for mobile network enhanced logic application part, wireless intelligent network protocol, intelligent network application protocol, unstructured supplementary service data and short message service.

5. The method according to claim 3, wherein the implementing the synchronization mechanism of the call status information comprises the following steps:
when obtaining call status change information of the user, notifying, by any one party of two synchronization parties, the other party; and updating, by the other party, the call status information stored in the other party according to the notification; or
when needing to learn the call status information of the user, querying, by any one party of two synchronization parties, the other party for the call status information of the user, and after the other party receives the query, returning, by the other party, the call status information of the user.

6. The method according to claim 1, wherein the CS network comprises but not limited: GSM system, WCDMA system CS domain, cdma2000 system CS domain, PSTN network.

## Patentansprüche

1. Verfahren der Domänenauswahl für Leitwegsteuerung, angewandt in einem Kommunikationssystem, umfassend ein leitungsvermitteltes bzw. CS-Netzwerk und ein IP-Multimedia-Subsystem, IMS, wobei ein Leitwegregelung-Entscheidungspunkt, RPDP, zum Speichern von Leitwegregelung-Informationen in dem Kommunikationssystem konfiguriert wird und das Verfahren Folgendes umfasst:
Empfangen, durch den RPDP, einer Abfrage von einer Leitwegentscheidungs-Abfrageinstanz, die eine Leitwegentscheidung abfragt, wenn die Leitwegentscheidungs-Abfrageinstanz einen eingehenden Anruf (101) für einen Benutzer leitet;
Herstellen, durch den RPDP, einer Leitwegentscheidung gemäß einer Leitwegregelung, Leitwegentscheidungs-bezogener Informationen und eines Anrufstatus eines bestehenden Anrufs des Benutzers in einem beliebigen einen oder beiden des CS-Netzwerks und des IMS;
Zurücksenden, durch den RPDP, von Leitweginformationen zu der Leitwegentscheidungs-Abfrageinstanz gemäß der Leitwegentscheidung (106); und
Durchführen von Leitwegsteuerung durch die Leitwegentscheidungs-Abfrageinstanz,
wobei das Herstellen einer Leitwegentscheidung gemäß einer Leitwegregelung, Leitwegentscheidungs-bezogenen Informationen und einem Anrufstatus des bestehenden Anrufs des Benutzers in einem beliebigen einen oder beiden des CS-Netzwerks und des IMS Folgendes umfasst:
Erhalten, durch den RPDP, des Anrufstatus des bestehenden Anrufs des Benutzers in einem beliebigen einen oder beiden des CS-Netzwerks und des IMS (103);
Bestimmen, durch den RPDP, den eingehenden Anruf zu dem CS-Netzwerk oder dem IMS gemäß dem erhaltenen Anrufstatus zu leiten (104); und
Herstellen, durch den RPDP, der Leitwegentscheidung gemäß der Bestimmung, der Leitwegregelung und den Leitwegentscheidungs-bezogenen Informationen (105),
wobei das System einen Modus übernimmt, der auf einer Anrufsteuerungsprotokollbasierten Schnittstelle basiert, der RPDP im Erhalteschritt den Anrufstatus des bestehenden Anrufs des Benutzers in dem CS-Netzwerk und der IMS-Domäne durch Überwachen des Anrufstatus erhält und die Anrufstatusinformationen lokal führt, und wobei das Verfahren ferner Folgendes umfasst:
Überwachen, durch den RPDP, eines Status und eines Abwicklungsprozesses einer eingehenden relevanten Anrufanforderung des Benutzers über die Anrufsteuerungsprotokoll-basierte Schnittstelle; und
Aktualisieren, durch den RPDP, von Anrufstatusinformationen, die im RPDP gespeichert sind, nach dem Aufbauen, und/oder Verbinden, und Freigeben des relevanten Anrufs des Benutzers.

2. Verfahren nach Anspruch 1, wobei der RPDP den Anrufstatus in nur einer Domäne der CS- und IMS-Domänen erhält und das Bestimmen, die eingehende Anrufanforderung zu dem CS-Netzwerk oder der IMS-Domäne gemäß dem Anrufstatus im Bestimmungsschritt zu leiten, spezifisch Folgendes umfasst:
Bestimmen des Anrufstatus des Benutzers in der einen Domäne, wenn der Anrufstatus aktiv oder in Bearbeitung ist, Auswählen der einen Domäne zum Durchführen einer anschließenden Leitweglenkung und, wenn der Anrufstatus in Bereitschaft ist, bevorzugtes Auswählen der anderen Domäne zum Durchführen einer anschließenden Leitweglenkung; oder
der RPDP die Anrufstatus in sowohl dem CS-Netzwerk als auch der IMS-Domäne erhält und das Bestimmen, die eingehende Anrufanforderung zu der CS-Domäne oder der IMS-Domäne gemäß dem Anrufstatus im Bestimmungsschritt zu leiten, spezifisch Folgendes umfasst: Bestimmen, ob sich der Benutzer in sowohl dem CS - Netzwerk als auch der IMS-Domäne in einem In-Bereitschaft-Status befindet, wenn der Benutzer in sowohl dem CS-Netzwerk als auch der IMS-Domäne in Bereitschaft ist, Auswählen von einer der Domänen zum Durchführen einer anschließenden Leitweglenkung mit ausgeglichener Priorität und andernfalls Auswählen einer Domäne, in der sich der Benutzer in einem Aktiv- oder In-Bearbeitung-Status befindet, zum Durchführen einer anschließenden Leitweglenkung.

3. Verfahren nach Anspruch 1, wobei eine logische Instanz in dem CS-Netzwerk und eine logische Instanz in der IMS-Domäne für den RPDP voneinander unabhängig sind; und das Verfahren ferner Folgendes umfasst:
Konfigurieren eines Synchronisierungsmechanismus der Anrufstatusinformationen zwischen den beiden voneinander unabhängigen logischen Instanzen.

4. Verfahren nach Anspruch 3, wobei die logische Instanz in dem CS-Netzwerk und die logische Instanz in der IMS-Domäne für den RPDP sich in derselben physikalischen Instanz befinden, der Synchronisierungsmechanismus der Anrufstatusinformationen durch eine interne Schnittstelle implementiert wird; oder
die logische Instanz in dem CS-Netzwerk und die logische Instanz in der IMS-Domäne für den RPDP sich in verschiedenen physikalischen Instanzen befinden, der Synchronisierungsmechanismus der Anrufstatusinformationen durch Signalisierungsinteraktion unter Verwendung eines Beliebigen von Folgendem implementiert wird: einem SIP, einer individuell angepassten Anwendung für ein Anwendungsteil einer erweiterten Mobilnetzwerklogik, Protokoll für drahtloses intelligentes Netzwerk, Anwendungsprotokoll für intelligentes Netzwerk, unstrukturierten ergänzenden Dienstdaten und Kurznachrichtendienst.

5. Verfahren nach Anspruch 3, wobei das Implementieren des Synchronisierungsmechanismus der Anrufstatusinformationen die folgenden Schritte umfasst:
wenn Anrufstatusänderungsinformationen des Benutzers erhalten werden, Melden, durch eine beliebige Partei von zwei Synchronisierungsparteien, an die andere Partei und Aktualisieren, durch die andere Partei, der Anrufstatusinformationen, die in der anderen Partei gespeichert werden, gemäß der Meldung; oder
wenn die Anrufstatusinformationen des Benutzers erlernt werden müssen, Abfragen, durch eine beliebige Partei von zwei Synchronisierungsparteien, der anderen Partei nach den Anrufstatusinformationen des Benutzers und, nachdem die andere Partei die Abfrage empfängt, Zurücksenden, durch die andere Partei, der Anrufstatusinformationen des Benutzers.

6. Verfahren nach Anspruch 1, wobei das CS-Netzwerk Folgendes umfasst, aber nicht darauf beschränkt ist: GSM-System, WCDMA-System-CS-Domäne, cdma2000-System-CS-Domäne und PSTN-Netzwerk.

## Revendications

1. Procédé de sélection de domaine pour une commande de routage, appliqué dans un système de communication comprenant un réseau à commutation de circuits, CS, et un sous-système multimédia IP, IMS, dans lequel un point de décision de politique de routage, RPDP, destiné à stocker des informations de politique de routage est configuré dans le système de communication, le procédé comprenant les étapes suivantes :
recevoir, par le RPDP, une requête à partir d'une entité de demande de décision de routage demandant une décision de routage lorsque l'entité de demande de décision de routage route un appel entrant (101) pour un utilisateur ;
prendre, par le RPDP, une décision de routage selon une politique de routage, des informations relatives à une décision de routage et un état d'appel d'un appel existant de l'utilisateur dans le réseau CS et l'IMS ou l'un des deux ;
retourner, par le RPDP, des informations de routage à l'entité de demande de décision de routage selon la décision de routage (106) ; et
exécuter une commande de routage par l'entité de demande de décision de routage,
l'étape consistant à prendre une décision de routage selon une politique de routage, des informations relatives à une décision de routage et un état d'appel de l'appel existant de l'utilisateur dans le réseau CS et l'IMS ou l'un des deux comprenant :
obtenir, par le RPDP, l'état d'appel de l'appel existant de l'utilisateur dans le réseau CS et l'IMS (103) ou l'un des deux ;
déterminer, par le RPDP, de router l'appel entrant vers le réseau CS ou l'IMS selon l'état d'appel obtenu (104) ; et
prendre, par le RPDP, la décision de routage selon la détermination, la politique de routage et les informations relatives à la décision de routage (105),
dans lequel le système adopte un mode basé sur une interface basée sur un protocole de contrôle d'appel, dans l'étape d'obtention, le RPDP obtient l'état d'appel de l'appel existant de l'utilisateur dans le réseau CS et le domaine IMS en contrôlant l'état d'appel et stocke localement les informations d'état d'appel, et dans lequel le procédé comprend en outre les étapes suivantes :
contrôler, par le RPDP, un état et un processus de traitement d'une requête d'appel approprié entrant de l'utilisateur par l'intermédiaire de l'interface basée sur un protocole de contrôle d'appel ; et
mettre à jour, par le RPDP, des informations d'état d'appel stockées dans le RPDP lors de l'établissement, et/ou de la connexion, et de la libération de l'appel approprié de l'utilisateur.

2. Procédé selon la revendication 1, dans lequel le RPDP obtient l'état d'appel dans un seul domaine parmi le domaine CS et le domaine IMS ; et la détermination pour router la requête d'appel entrant vers le réseau CS ou le domaine IMS en fonction de l'état d'appel au cours de l'étape de détermination consiste spécialement à :
déterminer l'état d'appel de l'utilisateur dans le seul domaine si l'état d'appel est actif ou en cours, sélectionner le seul domaine pour effectuer un routage ultérieur et, si l'état d'appel est inactif, sélectionner, de préférence, l'autre domaine pour effectuer un routage ultérieur ; ou
le RPDP obtient les états d'appel à la fois dans le réseau CS et le domaine IMS ; et la détermination pour router la requête d'appel entrant vers le domaine CS ou le domaine IMS en fonction de l'état d'appel au cours de l'étape de détermination consiste spécialement à : déterminer si l'utilisateur est dans un état inactif à la fois dans le réseau CS et le domaine IMS, si l'utilisateur est inactif à la fois dans le réseau CS et le domaine IMS, sélectionner l'un des domaines pour effectuer un routage ultérieur avec une priorité égale et, sinon, sélectionner un domaine dans lequel l'utilisateur est dans un état actif ou en cours pour effectuer un routage ultérieur.

3. Procédé selon la revendication 1, dans lequel une entité logique dans le réseau CS et une entité logique dans le domaine IMS pour le RPDP sont mutuellement indépendantes ; et le procédé comprend en outre l'étape suivante :
configurer un mécanisme de synchronisation des informations d'état d'appel entre les deux entités logiques mutuellement indépendantes.

4. Procédé selon la revendication 3, dans lequel l'entité logique dans le réseau CS et l'entité logique dans le domaine IMS pour le RPDP sont situées dans une même entité physique, le mécanisme de synchronisation des informations d'état d'appel est mis en oeuvre par l'intermédiaire d'une interface interne ; ou
l'entité logique dans le réseau CS et l'entité logique dans le domaine IMS pour le RPDP sont situées dans différentes entités physiques, le mécanisme de synchronisation des informations d'état d'appel est mis en oeuvre par l'intermédiaire d'une interaction de signalisation à l'aide de l'un quelconque des éléments suivants :
un SIP, une application personnalisée pour une partie d'application de logique améliorée de réseau mobile, protocole de réseau intelligent sans fil, protocole d'application de réseau intelligent, données de service supplémentaires non structurées et service de messagerie texto.

5. Procédé selon la revendication 3, dans lequel la mise en oeuvre du mécanisme de synchronisation des informations d'état d'appel comprend les étapes suivantes consistant :
lors de l'obtention des informations de changement d'état d'appel de l'utilisateur, à avertir, au moyen d'une partie quelconque parmi deux parties de synchronisation, l'autre partie ; et à mettre à jour, au moyen de l'autre partie, les informations d'état d'appel stockées dans l'autre partie en fonction de la notification ; ou
lorsqu'il est nécessaire de connaître les informations d'état d'appel de l'utilisateur, à demander, au moyen d'une partie quelconque parmi deux parties de synchronisation, à l'autre partie les informations d'état d'appel de l'utilisateur et, après que l'autre partie reçoit la demande, renvoyer, au moyen de l'autre partie, les informations d'état d'appel de l'utilisateur.

6. Procédé selon la revendication 1, dans lequel le réseau CS comprend, mais de façon non limitative : le système GSM, le domaine CS du système WCDMA, le domaine CS du système cdma2000, le réseau PSTN.
